# EUROPÄISCHE PATENTSCHRIFT

(11) **EP 2 683 975 B1**
(45) Veröffentlichungstag und Bekanntmachung des Hinweises auf die Patenterteilung: **28.01.2015**
(21) Anmeldenummer: 11708202.4
(22) Anmeldetag: 11.03.2011
(51) Int. Cl.: F16L 33/207, F16L 11/08, F16L 11/20

(54) **WENDELUMHÜLLTER SCHLAUCH**
SPIRAL-BOUND HOSE
TUYAU À GAINE HÉLICOÏDALE

(43) Veröffentlichungstag der Anmeldung: 15.01.2014
(73) Patentinhaber: Neoperl GmbH, 79379 Müllheim (DE)
(72) Erfinder: MAGER, Kevin, 79379 Müllheim (DE); KURY, Werner, 79379 Müllheim (DE)
(74) Vertreter: Börjes-Pestalozza, Henrich
(86) Internationale Anmeldenummer: PCT/EP2011/001214
(87) Internationale Veröffentlichungsnummer: WO 2012/122992

(56) Entgegenhaltungen:
- EP-A2- 0 874 184
- DE-A1-102010 008 733
- GB-A- 2 362 694
- US-A- 4 159 027

## Beschreibung

Die Erfindung betrifft einen wendelumhüllten Schlauch mit einem flexiblen, die zu transportierende Flüssigkeit aufnehmenden Innenliner und einem an der Außenfläche des Innenliners angeordneten, insbesondere als biegsame Wendel ausgebildeten Führungsmittel, wobei der Schlauch an wenigstens einem seiner Enden mit einem Anschlussfitting zur Verbindung entweder mit einer Brause oder dergleichen beweglichen Auslaufarmatur oder mit einem Installationsanschluss versehen ist, wobei an dem betreffenden Schlauchende ein Verbindungsmittel vorgesehen ist, welches aus einer Montagestellung in eine Gebrauchsstellung plastisch verformt das Ende des Schlauchs mit dem Anschlussfitting kleber- und/oder dichtmittelfrei zugfest und dicht verbindet, und wobei das Anschlussfitting mit einem Stutzen versehen ist, der zumindest mit einem Teil seiner Länge in dem Schlauchende aufgenommen ist.

Wendelumhüllte Schläuche sind bereits bekannt und finden beispielsweise als Brauseschläuche in sanitärer Umgebung oder auch im Küchenumfeld ihren Einsatz. Bei herkömmlichen Schläuchen ist das Anschlussfitting etwa durch Verpressen auf dem Schlauchende angeordnet, wobei die Dichtigkeit durch Anwendung eines Klebers oder eines Dichtmittels hergestellt wird. Dies kann dahingehend nachteilig sein, dass aufgrund des Einsatzes im Trinkwasserbereich zunächst ein nicht in dieses austretender, das Wasser nicht belastender Klebstoff Verwendung finden muss, was zum einen mit zusätzlichen Kosten bei der Herstellung verbunden sein kann, zum anderen eventuell hierdurch keine genügende Dichtigkeit gewährleistet ist. Durch die an der Außenseite des Innenliners zur Führung, zum Schutz und für die mechanische Festigkeit des Schlauches angeordnete Wendel kommt es darüber hinaus zu einer ortsabhängig unterschiedlichen Flächenpressung an dem Stutzen des Anschlussfittings, wodurch - verursacht durch die mechanischen Gebrauchsbelastungen des wendelumhüllten Schlauches - Leckagen auftreten können, die eigentlich durch den Einsatz des Klebers kompensiert werden sollten. Gerade bei wendelumhüllten Schläuchen besteht die Gefahr von Dichtigkeitsproblemen im Bereich des Anschlussfittings. Die Anordnung des Anschlussfittings an dem Auslaufende des wendelumhüllten Schlauches kann überdies mit einer unerwünschten Geräuschentwicklung sowie einer nachteiligen Dürchflussminderung verbunden sein.

Aus der GB 2 362 694 A kennt man bereits einen wendelumhüllten Schlauch der einganges erwähnten Art mit einem flexiblen Innenliner, der die zu transportierende Flüssigkeit aufzunehmen hat. An der Außenfläche des Innenliners ist ein als biegsame Wendel ausgebildetes Führungsmittel angeordnet. An wenigstens einem seiner Enden ist der Schlauch mit einem Anschlussfitting zur Verbindung mit einem Installationsanschluss versehen. Das Verbindungsmittel, das einen zylindrischen Nippel mit einem stirnseitigen Ringflansch und eine, den von der biegsamen Welle umhüllten Innenliner auf dem Nippel haltende Quetschhülse umfasst, soll das Schlauchende mit dem Anschlussfitting klebe- und dichtmittelfrei, zugfest und dicht verbinden. Dazu ist die Quetschhülse aus einer Montagestellung in eine Gebrauchsstellung derart plastisch verformt, dass der von der Wendel umhüllte Innenliner fest auf einem Schlauchstutzen des zylindrischen Nippels gepresst wird, welcher Schlauchstutzen zumindest mit einem Teil seiner Länge in dem Schlauchende aufgenommen ist.

Da der Innenliner bei dem aus GB 2 362 694 A vorgekannten Schlauch auf den zylindrischen Schlauchstutzen gehalten ist, besteht die Gefahr, dass das Schlauchende bei einer übergroßen Zugbelastung unbeabsichtigt von dem Schlauchstutzen abgezogen wird und sich vom Anschlussfitting lösen kann. Da die durch die Quetschhülse ausgeübte Anpresskraft nur über die Wendel linienförmig auf das Schlauchende des Innenliners übertragen werden kann und da zwischen den Wendelabschnitten in Längsrichtung unbelastete Schlauchabschnitte verbleiben, besteht die Gefahr, dass diese Verbindung nicht dauerhaft dicht bleibt.

Aus der US 4 159 027 A ist bereits ein Schlauch vorbekannt, der an zumindest einem Schlauchende mit einem Anschlussfitting verbunden ist. Das Anschlussfitting weist einen Schlauchstutzen auf, der in das Schlauchende aufgenommen ist. Das Schlauchende wird auf dem Stutzen mittels einer Quetschhülse gehalten, die derart verformt ist, dass sich in einem mittleren Abschnitt der Quetschhülse eine Einsenkung bildet. Der aus der US 4 159 027 A vorbekannte Schlauch ist mit einem außen anliegenden Metallgeflecht verstärkt, das aus einander kreuzenden und miteinander verwobenen Scharen dünner Metalldrähte gebildet ist, die wendelförmig um den Schlauch umlaufen. Dieses Metallgeflecht bildet jedoch kein biegsames Führungsmittel, sondern vermag nur die Widerstandskraft des Schlauches beim Durchführen hoher Fluiddrücke zu erhöhen.

Es besteht daher auch weiterhin die Aufgabe, einen wendelumhüllten Schlauch zur Verfügung zu stellen, der zum Transport von Trinkwasser geeignet ist und auch bei mechanischer Belastung zuverlässig und haltbar eine hohe Dichtigkeit bieten soll.

Diese Aufgabe wird erfindungsgemäß durch einen wendelumhüllten Schlauch der eingangs genannten Art gelöst, für den kennzeichnend ist, dass der Stutzen des Anschlussfittings einen Abschnitt mit zylindrischer Außenfläche und einen, dem Flanschbereich zugewandten, strukturierten Abschnitt aufweist.

Da der erfindungsgemäße Schlauch ein Anschlussfitting mit einem Stutzen hat, der einen Abschnitt mit zylindrischer Außenfläche und einen dem Flanschbereich zugewandten strukturierten Abschnitt aufweist, ergeben sich bei dem erfindungsgemäßen Schlauch Vorteile bei der Handhabung und Dichtigkeit. So kann durch den zylindrischen Abschnitt des Stutzens eine in diesem Abschnitt einheitliche Flächenpressung und hierdurch eine hohe Dichtigkeit erreicht werden. Demgegenüber wird mittels eines strukturierten Bereichs, der insbesondere etwa durch Rippen, bevorzugt gleichmäßig beabstandete, um den Stutzenabschnitt umlaufende Rippen gebildet sein kann, einer Kraft entgegengewirkt, die den Stutzen aus dem Schlauchende herausziehen drohte. Die erwähnten Rippen dieses Stutzenabschnitts werden entsprechend ausgesteift bei Herstellen der Verbindung zwischen Anschlussfitting und Innenliner in das Material des letzteren getrieben und stellen einen Widerstand gegen die Abzugskraft dar.

Durch die plastische Verformung bei Überführung des zunächst in Montagestellung lose angeordneten Verbindungsmittels in seine Gebrauchsstellung wird also eine dauerhafte, stabile Verbindung zwischen Anschlussfitting und Schlauchende geschafen, ohne hierfür überhaupt einen Klebstoff einsetzen zu müssen. Trotzdem sind die Beteiligten dieser Verbindung derart fest miteinander verbunden, dass auch stärkere mechanische Beanspruchungen des wendelumhüllten Schlauches der Verbindung nichts anhaben können und auch nicht zu einer Leckage des Schlauchs in seinem Endbereich führen. Im übrigen muss der Schlauch sowohl hinsichtlich seiner Außenkontur als auch was den durchströmten Querschnitt seiner Einzelteile angeht, nicht zwangsweise einen kreisrunden Querschnitt aufweisen.

Bei einer mit einfachen Mitteln schnell und zuverlässig herstellbaren Ausführung des wendelumhüllten Schlauches ist das Verbindungsmittel als Hülse, insbesondere als Crimphülse vorgesehen ist, die die Endbereiche des Innenliners und des Führungsmittels übergreift. Auch in der Gebrauchsstellung übergreift die dann gecrimpte Hülse wenigstens einen vollständigen Umlauf der Wendel um eine insbesondere dichte Verbindung zu bieten.

Dabei kann ein guter Sitz des Stutzens des Anschlussfittings an dem Schlauchende bereits in der Montagestellung des Verbindungsmittels bei einer Weiterbildung des wendelumhüllten Schlauches dadurch erreicht werden, dass der Außendurchmesser des Stutzens des Anschlussfittings größer als der Innendurchmesser des Innenliners vorgesehen ist und derart der Stutzen gegen die querschnittsverjüngende Kraft der Formgebung des flexiblen Innenliners in das Schlauchende eingeführt, durch diese Kraft dort aber wiederum zunächst auch bis zur plastischen Verformung des Verbindungsmittels verliersicher gehalten ist.

Vorteilhafterweise kann das Anschlussfitting einer Ausführungsform des wendelumhüllten Schlauches zur Verbindung desselben mit anderen Installationen auslaufseitig mit einem Flansch beziehungsweise Flanschbereich versehen sein.

Eine erhöhte Beständigkeit gegen die durch Biegung des Schlauchs verursachte mechanische Beanspruchung ist bei einer vorteilhaften Weiterbildung des wendelumhüllten Schlauches festzustellen, bei der der Stutzen des Anschlussfittings wenigstens so weit in den Innenliner ragt, dass zumindest ein vollständiger Umlauf der Wendel auf dessen Abschnitt mit zylindrischer Außenfläche aufliegt.

Eine allgemein gegen vielfältige Beaufschlagungen sowohl mechanischer als auch etwa chemischer Natur, beispielsweise in Form von Reinigungsmitteln oder dergleichen aggressiven Stoffen gewachsener, wendelumhüllter Schlauch kann bei einer anderen Ausführungsform mit einer Deckschicht versehen sein, die zumindest die Wendel einfasst, insbesondere die Wendel und den Innenliner vollständig überdeckt.

Eine solche Schicht kann auch aus hygienischen Gründen wegen der glatten Oberfläche sowie aus haptischen Gründen wegen der weichen Oberfläche eine bevorzugte Ausführungsform darstellen.

Bei einer zweckmäßigen, gut handhabbaren Weiterbildung des wendelumhüllten Schlauches kann dann etwa die Deckschicht eine gleichförmige Außenkontur des wendelumhüllten Schlauches bilden. Hierbei können sowohl der Innenliner mit der Wendel in eine homogene Matrix der Deckschicht quasi eingegossen sein, ebenso kann die Deckschicht nur eine die Wendel zusätzlich einfassende einheitliche Außenkontur bilden, während zwischen den Wendeln ein durch die Außenkontur begrenzter Hohlraum verbleibt.

In einer reduzierten Zahl von Arbeitsgängen und daher aufwandsarm lässt sich eine andere Ausführung des wendelumhüllten Schlauches fertigen, bei welcher der Innenliner und die Deckschicht aus dem gleichen Werkstoff, insbesondere einem trinkwassergeeigneten Kunststoff gebildet, sind.

Die Erfindung wird nachstehend anhand eines Ausführungsbeispiels in der Zeichnung noch näher erläutert, die - soweit zutreffend, das Verbindungsmittel aus praktischen Gründen in der unverformten Montagestellung zeigt. Es zeigen in teilweise schematisierter Darstellung:
- Fig.1: eine teilgeschnittene, ebene Seitenansicht eines wendelumhüllten Schlauches mit Wendel, Anschlussfitting, Verbindungsmittel und Deckschicht,
- Fig.2: eine ebene Seitenansicht des wendelumhüllten Schlauches aus Fig.1, bei der die Deckschicht ganz weggelassen wurde,
- Fig.3: eine entlang der Schnittlinie III-III aus Fig.2 geschnittene Seitenansicht des wendelumhüllten Schlauches der Fig.1 und 2 mit Darstellung der Deckschicht,
- Fig.4: einen Detailausschnitt des wendelumhüllten Schlauches gemäß Fig.3.

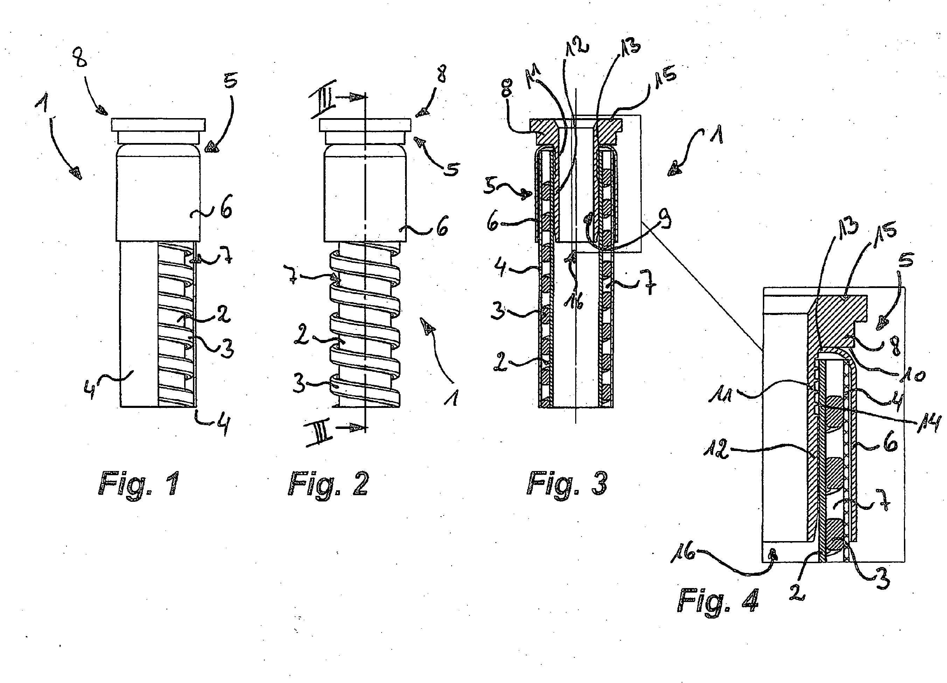

In den Fig.1 bis 4 ist ein im Ganzen mit 1 bezeichneter, wendelumhüllter Schlauch zu erkennen, der eine Schlauchseele oder einen Innenliner 2 aufweist, um dessen Außenfläche eine Wendel 3 umläuft. Innenliner 2 und Wendel 3 sind von einer Deckschicht 4 überdeckt, die die durch Gänge der Spiralwendel 3 gebildeten Zwischenräume 7 materialsparend freilässt und trotzdem die Außenkontur des wendelumhüllten Schlauches 1 gleichförmig in dem Sinne ist, dass sie einheitlich kreisrund ausgebildet ist. In das nach oben hin offene Schlauchende des wendelumhüllten Schlauches 1 greift ein Abschnitt eines Anschlussfittings 5, von welchem in den Fig.1 und 2 nur der Flanschbereich 8 erkennbar ist. An dem dargestellten Schlauchende des Spiralschlauchs 1 ist erkennbar ein hülsenartiges Verbindungsmittel 6 in Montagestellung angeordnet, um aus dieser Montagestellung in eine Gebrauchsstellung plastisch verformt das Ende des Schlauchs 1 mit dem Anschlussfitting 5 kleberfrei zugfest und dicht zu verbinden. Das Verbindungsmittel 6 ist dabei als eine, die Endbereiche des Innenliners 2 und der Wendel 3 übergreifende Crimphülse 6 ausgebildet, die einen zylindrischen Abschnitt und einen in die dem Flanschbereich 8 des Anschlussfittings 5 zugewandten Öffnung mündenden, nach innen gekrümmten Abschnitt aufweist.

In den Fig. 3 und 4 ist zu erkennen, dass das Anschlussfitting mit einem Stutzen 9 versehen ist, der mit seiner gesamten Länge in dem Innenliner 2 des Schlauchs 1 aufgenommen ist und welcher wiederum einen sich an den Flanschbereich 8 in Richtung des Schlauchs anschließenden, mit Rippen 14 strukturierten Abschnitt 11 und einen sich daran anschließenden, zylindrischen Abschnitt 12 aufweist. Der Stutzen 9 weist, in der Darstellung der Fig. 1 bis 4 nicht erkennbar, einen gegenüber dem Innendurchmesser des Innenliners 2 leicht vergrößerten Außendurchmesser auf.

In der Montagestellung der Hülse 6 ist die Außenfläche von deren gekrümmtem Bereich einer Fläche 10 des Flanschbereichs 8 zugewandt, deren Normale in Erstreckungsrichtung des Schlauchs 1 weist. Die Hülse 6 übergreift in der Fig. 4 von außen nach innen gesehen die Deckschicht 4, die Wendel 3 und den Innenliner 2 auf einer Höhe von etwa drei Gängen der Wendel 3, wobei ihr dem Anschlussfitting 5 zugewandter Öffnungsrand einem Absatz 13 des Fittings 5 unmittelbar benachbart angeordnet ist und diesen vorzugsweise bereits berührt. Die Hülse übergreift die Deckschicht 4, die Wendel 3 und den Innenliner 2 nicht nur außen- sondern zweckmäßigerweise auch in Montagestellung bereits stirnseitig. Der Endbereich des Innenliners 2 kommt in der dargestellten Montagestellung direkt gegenüber dem außenseitig mit Rippen oder Rillen versehenen Abschnitt 11 des Anschlussfittings 5 zu liegen, so dass die radial von dem Abschnitt 11 vorstehenden Rippen oder Rillen 14 bei Überführung in die Gebrauchsstellung in das Material des Innenliners 2 getrieben werden.

Des weiteren ist den Fig. 3 und 4 entnehmbar, dass der Stutzen 9 des Anschlussfittings 5 wenigstens so weit in den Innenliner ragt, dass zumindest ein vollständiger Umlauf der Wendel auf dessen Abschnitt mit zylindrischer Außenfläche aufliegt, so dass aufgrund vorteilhafter Flächenpressung eine hohe Dichtigkeit bei dem wendelumhüllten Schlauch 1 erreicht wird.

In der geschnittenen Ansicht der Fig. 4 ist das Anschlussfitting 5 des wendelumhüllten Schlauchs 1 dargestellt, um die Einzelheiten des Fittings 5, wie die beiden Abschnitte 11, 12, den Flanschbereich 8, die Flanschfläche 10 und den Absatz 13 sowie die Rippen oder Rillen 14 noch besser betrachten zu können. In den Fig. 3 und 4 ist außerdem in dem Flanschbereich 8 zu erkennen, dass sich der Öffnungsquerschnitt auslassseitig ein wenig aufweitet, überdies an der Stirnfläche des Flansches 8 eine Nut 15 angeordnet ist, die eine nicht gezeigte Dichtung aufnehmen kann.

Außerdem ist in der Fig. 4 auch der Einlass des Fittings 5 mit dem Einlassende 16 des Stutzens 9 besser erkennbar. Wie dort dargestellt ist, verjüngt sich der Außendurchmesser des Einlassendes 16 des Stutzens 9 des Anschlussfittings 5 in von dem Flansch 8 abgewandter Richtung, so dass der Stutzen einfach in das Ende des in der Fig. 6 nicht gezeigten Innenliners 2 einführen lässt.

Die vorstehend beschriebene Erfindung betrifft demnach einen wendelumhüllten Schlauch 1 mit einem flexiblen, die zu transportierende Flüssigkeit aufnehmenden Innenliner 2 und einem an der Außenfläche des Innenliners 2 angeordneten, insbesondere als biegsame Wendel ausgebildeten Führungsmittel 3, wobei der Schlauch 1 an wenigstens einem seiner Enden, vorzugsweise auslaufseitig, mit einem Anschlussfitting 5 zur Verbindung entweder mit einer Brause oder dergleichen beweglichen Auslaufarmatur oder mit einem Installationsanschluss versehen ist. Um einen Spiralschlauch 1 zur Verfügung zu haben, der zum Transport von Trinkwasser geeignet ist und auch bei mechanischer Belastung zuverlässig und haltbar eine hohe Dichtigkeit bietet sowie ein verbessertes Durchflussverhalten zeigt, ist an dem betreffenden Schlauchende ein Verbindungsmittel 6 vorgesehen, welches aus einer Montagestellung in eine Gebrauchsstellung plastisch verformt das Ende des Schlauches 1 mit dem Anschlussfitting 5 kleber- und dichtmittelfrei zugfest und dicht verbindet.

## Patentansprüche

1. Wendelumhüllter Schlauch (1) mit einem flexiblen, die zu transportierende Flüssigkeit aufnehmenden Innenliner (2) und einem an der Außenfläche des Innenliners (2) angeordneten, insbesondere als biegsame Wendel ausgebildeten Führungsmittel (3), wobei der Schlauch (1) an wenigstens einem seiner Enden mit einem Anschlussfitting (5) zur Verbindung entweder mit einer Brause oder dergleichen beweglichen Auslaufarmatur oder mit einem Installationsanschluss versehen ist, wobei an dem betreffenden Schlauchende ein Verbindungsmittel (6) vorgesehen ist, welches aus einer Montagestellung in eine Gebrauchsstellung plastisch verformt das Ende des Schlauchs (1) mit dem Anschlussfitting (5) kleber- und/oder dichtmittelfrei zugfest und dicht verbindet, und wobei das Anschlussfitting (5) mit einem Stutzen (9) versehen ist, der zumindest mit einem Teil seiner Länge in dem Schlauchende aufgenommen ist, **dadurch gekennzeichnet, dass** der Stutzen (9) des Anschlussfittings (5) einen Abschnitt (12) mit zylindrischer Außenfläche und einen, dem Flanschbereich (8) zugewandten, strukturierten Abschnitt (11) aufweist.

2. Schlauch nach Anspruch 1, **dadurch gekennzeichnet, dass** das Verbindungsmittel (6) als Hülse, insbesondere als Crimphülse vorgesehen ist, die die Endbereiche des. Innenliners (2) und des Führungsmittels (3) übergreift.

3. Schlauch nach Anspruch 1 oder 2, **dadurch gekennzeichnet, dass** der Stutzen (9) des Anschlussfittings (5) zumindest mit dem überwiegenden Teil seiner Länge und insbesondere vollständig in dem Schlauchende aufgenommen ist.

4. Schlauch nach einem der Ansprüche 1 bis 3, **dadurch gekennzeichnet, dass** der Außendurchmesser des Stutzens (9) des Anschlussfittings. (5) größer als der Innendurchmesser des Innenliners (2) vorgesehen ist.

5. Schlauch nach einem der vorhergehenden Ansprüche, **dadurch gekennzeichnet, dass** das Anschlussfitting (5) zur Verbindung des Schlauchs (1) mit anderen Installationen auslaufseitig mit einem Flanschbereich (8) versehen ist.

6. Schlauch nach einem der vorhergehenden Ansprüche, **dadurch gekennzeichnet, dass** der Stutzen (9) des Anschlussfittings (5) wenigstens so weit in den Innenliner (2) fragt, dass zumindest ein vollständiger Umlauf der Wendel 1 (3) auf dessen Abschnitt (12) mit zylindrischer Außenfläche aufliegt.

7. Schlauch nach einem der vorhergehenden Ansprüche, **dadurch gekennzeichnet, dass** dieser mit einer Deckschicht (4) versehen ist, die zumindest die Wendel (3) einfasst, insbesondere die Wendel (3) und den Innenliner (2) vollständig überdeckt.

8. Schlauch nach Anspruch 7, **dadurch gekennzeichnet, dass** die Deckschicht (4) eine gleichförmige Außenkontur des Schlauchs (1) bildet.

9. Schlauch nach einem der vorhergehenden Ansprüche, **dadurch gekennzeichnet, dass** der Innenliner (2) und die Deckschicht (4) aus dem gleichen Werkstoff, insbesondere einem trinkwassergeeigneten Kunststoff gebildet sind.

## Claims

1. Coil-encased hose (1) having a flexible inner liner (2) which receives the liquid to be transported and having a guide means (3) which is arranged on the outer surface of the inner liner (2) and which is in particular in the form of a flexible coil, wherein the hose (1) is provided, on at least one of its ends, with an attachment fitting (5) for connecting either to a shower or similar movable outlet fitting or to an installation attachment, wherein a connecting means (6) is provided at the hose end in question and, when plastically deformed from a mounting position to a usage position, connects the end of the hose (1) to the attachment fitting (5) without adhesive and/or sealing means in an extension-resistant and sealed manner, and wherein the attachment fitting (5) is provided with a connecting piece (9) which with at least part of its length is received in the hose end, **characterised in that** the connecting piece (9) of the attachment fitting (5) has a portion (12) with a cylindrical outer surface and a structured portion (11) facing the flange region (8).

2. Hose as claimed in claim 1, **characterised in that** the connecting means (6) is provided as a sleeve, in particular as a crimped sleeve, which engages over the end regions of the inner liner (2) and of the guide means (3).

3. Hose as claimed in claim 1 or 2, **characterised in that** the connecting piece (9) of the attachment fitting (5) is received in the hose end at least with the majority of its length and in particular completely.

4. Hose as claimed in any one of claims 1 to 3, **characterised in that** the outer diameter of the connecting piece (9) of the attachment fitting (5) is larger than the inner diameter of the inner liner (2).

5. Hose as claimed in any one of the preceding claims, **characterised in that** the attachment fitting (5) for connection of the hose (1) to other installations is provided with a flange region (8) on the outlet side.

6. Hose as claimed in any one of the preceding claims, **characterised in that** the connecting piece (9) of the attachment fitting (5) protrudes at least so far into the inner liner (2) that at least one complete turn of the coil (3) lies on the portion (12) thereof with a cylindrical outer surface.

7. Hose as claimed in any one of the preceding claims, **characterised in that** this hose is provided with a cover layer (4) which surrounds at least the coil (3), in particular completely covers the coil (3) and the inner liner (2).

8. Hose as claimed in claim 7, **characterised in that** the cover layer (4) forms a uniform outer contour for the hose (1).

9. Hose as claimed in any one of the preceding claims, **characterised in that** the inner liner (2) and the cover layer (4) are formed from the same material, in particular a synthetic material suitable for use with drinking water.

## Revendications

1. Tuyau souple (1) à gaine hélicoïdale, avec une chemise intérieure flexible (2) recevant le liquide à transporter et avec un moyen de guidage (3) disposé sur la surface extérieure de la chemise intérieure (2) et réalisé notamment sous la forme d'un élément hélicoïdal souple, sachant que le tuyau souple (1) est pourvu à au moins une de ses extrémités d'un raccord (5) destiné à faire la liaison soit avec une pomme de douche ou autre robinetterie de sortie mobile similaire soit avec un raccord d'installation, sachant qu'un moyen de liaison (6) est prévu à l'extrémité concernée du tuyau souple, moyen qui, en se déformant plastiquement lorsqu'il passe d'une position de montage dans une position d'utilisation, réalise une liaison étanche et résistante à la traction entre l'extrémité du tuyau souple (1) et le raccord (5) sans mise en oeuvre d'adhésifs et/ou d'agents d'étanchéité, et sachant que le raccord (5) est pourvu d'un embout (9) dont au moins une partie de la longueur est reçue dans l'extrémité du tuyau souple, **caractérisé en ce que** l'embout (9) du raccord (5) présente un tronçon (12) ayant une surface extérieure cylindrique et un tronçon (11) structuré, tourné vers la région formant collet (8).

2. Tuyau souple selon la revendication 1, **caractérisé en ce que** le moyen de liaison (6) est prévu sous forme de douille, en particulier de douille sertie, qui engage en recouvrement les régions terminales de la chemise intérieure (2) et du moyen de guidage (3).

3. Tuyau souple selon la revendication 1 ou 2, **caractérisé en ce que** l'embout (9) du raccord (5) est reçu dans l'extrémité du tuyau souple par la majeure partie de sa longueur et notamment en totalité.

4. Tuyau souple selon l'une des revendications 1 à 3, **caractérisé en ce que** le diamètre extérieur de l'embout (9) du raccord (5) est prévu supérieur au diamètre intérieur de la chemise intérieure (2).

5. Tuyau souple selon l'une des revendications précédentes, **caractérisé en ce que** le raccord (5) est pourvu du côté de sortie d'une région formant collet (8) afin de relier le tuyau souple (1) à d'autres installations.

6. Tuyau souple selon l'une des revendications précédentes, **caractérisé en ce que** l'embout (9) du raccord (5) s'enfonce au moins suffisamment dans la chemise intérieure (2) pour qu'au moins un tour complet de l'élément hélicoïdal (3) repose sur son tronçon (12) ayant une surface extérieure cylindrique.

7. Tuyau souple selon l'une des revendications précédentes, **caractérisé en ce que** celui-ci est pourvu d'une couche de recouvrement (4) qui entoure au moins l'élément hélicoïdal (3), en particulier qui recouvre totalement l'élément hélicoïdal (3) et la chemise intérieure (2).

8. Tuyau souple selon la revendication 7, **caractérisé en ce que** la couche de recouvrement (4) forme un contour extérieur uniforme du tuyau souple (1).

9. Tuyau souple selon l'une des revendications précédentes, **caractérisé en ce que** la chemise intérieure (2) et la couche de recouvrement (4) sont constituées du même matériau, en particulier d'une matière plastique convenant pour l'eau potable.
